# EUROPEAN PATENT APPLICATION

(11) **EP 4 645 190 A1**
(43) Date of publication of application: **05.11.2025**
(21) Application number: 23912020.7
(22) Date of filing: 25.12.2023
(51) Int. Cl.: G06Q 10/30

(54) **INFORMATION PROCESSING DEVICE, INFORMATION PROCESSING SYSTEM, INFORMATION PROCESSING METHOD, AND PROGRAM**

(30) Priority: 27.12.2022 JP 2022209224
(71) Applicant: Sekisui Chemical Co., Ltd., Osaka-shi, Osaka 530-8565 (JP)
(72) Inventor: SUYAMA NARITA Kotomi, Tsukuba-shi, Ibaraki 300-4292 (JP); MIKI, Nanami, Tsukuba-shi, Ibaraki 300-4292 (JP); SATOU, Kanetomo, Tsukuba-shi, Ibaraki 300-4292 (JP); SHINDO, Chikako, Tokyo 105-8566 (JP)
(74) Representative: Ter Meer Steinmeister & Partner
(86) International application number: PCT/JP2023/046309
(87) International publication number: WO 2024/143240

(57) **Abstract**

[Problem] To provide an information processing device and the like capable of further ensuring traceability of a resin material that is recycled.

[Solution] According to one aspect of the present invention, an information processing device is provided. The information processing device is provided with an acquisition unit and a registration unit. The acquisition unit associates a resin material and information related to a predetermined parameter obtained by measuring the resin material with each other to acquire first information in any of the steps of a process of recycling the resin material. The registration unit registers the acquired first information in a block chain.

## Description

### Field

The present embodiment relates to an information processing device (apparatus), an information processing system, an information processing method, and a program.

### Background

In recent years, technologies related to recycling have been developed in order to realize a sustainable society. For example, PTL 1 discloses an organic waste recycling promotion management system that enables the reuse of organic waste as a recyclable resource and promotes active participation and the like by those involved in waste processing.

Additionally, PTL 2 discloses a method of obtaining information on the inflow amount of recycled resin at a plastic product manufacturing entity and the outflow amount of plastic products made from recycled resin at the manufacturing entity, and granting certification to the plastic products if the obtained information satisfies predetermined certification conditions.

### Citation List

### Patent Literature

[Patent Literature 1] JP 2021-96523 A
[Patent Literature 2] WO 2022/092278 A1

### SummaryTechnical Problem

By the way, in constructing a recycling process, the need to ensure appropriate traceability may arise. Although the technologies described in PTL 2 also mention that transaction information between business operators can be registered on a blockchain, there remains a demand for technologies that are suitable for ensuring process traceability.

In view of the above circumstances, the present embodiment provides an information processing device and the like that can more reliably ensure the traceability of resin materials during their recycling. Solution to Problem

According to one aspect of the present embodiment, an information processing device is provided. The information processing device includes an acquisition unit and a registration unit. The acquisition unit acquires first information by associating a resin material with information related to a predetermined parameter obtained by measuring the resin material in any of steps of a process of recycling the resin material. The registration unit registers the acquired first information on a blockchain.

According to the above-mentioned aspect, there is provided an information processing device and the like that can more reliably ensure the traceability of resin materials during their recycling. Brief Description of

### Drawings

[FIG. 1] FIG. 1 is a diagram illustrating the overall configuration of an information processing system 100.
[FIG. 2] FIG. 2 is a diagram illustrating the hardware configuration of an information processing device 1.
[FIG. 3] FIG. 3 is a diagram illustrating the hardware configuration of a user terminal 6.
[FIG. 4] FIG. 4 is a functional block diagram illustrating the functions of the information processing device 1.
[FIG. 5] FIG. 5 is an activity diagram representing the flow of a registration process.
[FIG. 6] FIG. 6 illustrates an example of a display screen displayed on the information processing device 1.
[FIG. 7] FIG. 7 is a diagram for representing an example of history information registered by the information processing device 1.
[FIG. 8] FIG. 8 is a conceptual diagram for describing the step of determining authenticity.
[FIG. 9] FIG. 9 is an activity diagram representing the flow of information processing related to the display of history information.
[FIG. 10] FIG. 10 illustrates an example of history information displayed on the user terminal 6. Details of Embodiments

Hereinafter, an embodiment of the present invention will be described using the drawings. Various features described in the embodiment below can be combined with each other.

That is, an information processing device of the present embodiment is as described below.

An information processing device including:
an acquisition unit configured to acquire first information by associating a resin material with information related to a predetermined parameter obtained by measuring the resin material in any of steps of a process of recycling the resin material; and
a registration unit configured to register the acquired first information on a blockchain.

By the way, a program for implementing software described in the present embodiment may be provided on a non-transitory computer-readable recording medium, or it may be made available for download from an external server. Alternatively, it may be provided in a manner that allows the program to be run on an external computer, thereby implementing its functions on a client terminal (i.e., cloud computing).

In the present embodiment, the term "unit" may also include, for example, a combination of hardware resources implemented by circuits in a broad sense, as well as the information processing performed by software that may be specifically implemented by such hardware resources. Additionally, various types of information are handled in the present embodiment, and such information may be represented by physical values such as signal values indicating voltage or current, by high and low signal levels in a binary bit set consisting of 0s and 1s, or by quantum superposition (i.e., quantum bits), and communication and computation may be executed by circuits in a broad sense.

Furthermore, circuits in a broad sense refer to circuits implemented by appropriately combining at least circuits, circuitry, processors, memory, and the like. That is, they include application-specific integrated circuits (ASICs) and programmable logic devices (such as simple programmable logic devices (SPLDs), complex programmable logic devices (CPLDs) and field-programmable gate arrays FPGAs)).

### 1. Hardware Configuration

This section describes the hardware configuration of an information processing system 100 according to the present embodiment.

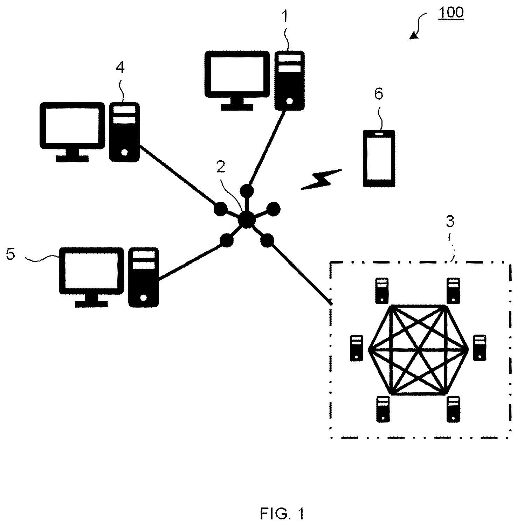

FIG. 1 is a diagram illustrating the overall configuration of the information processing system 100.

In one example of the present embodiment, the information processing system 100 includes multiple information processing devices and a BC system 3 (BC = Blockchain; hereinafter sometimes simply referred to as "blockchain") that is capable of communicating with each of the information processing devices. In a more specific example, the information processing system 100 includes a communication line 2, the BC system 3, an information processing device 1, an information processing device 4, an information processing device 5, and a user terminal 6. The communication line 2 includes the Internet and the like, and mediates the exchange of data between devices connected to the communication line 2. The BC system 3 manages various types of information in a distributed manner using the blockchain mechanism. Here, the term "(information processing) system" as used in the present specification refers to a system composed of one or more devices or components. Therefore, even the single information processing device 1 serves as an example of a system.

The BC system 3 includes multiple node devices connected to each other via a P2P (Peer-to-Peer) network. For example, the BC System 3 segments various transaction information into blocks of a predetermined capacity and sequentially links these blocks to generate a blockchain. The BC system 3 assigns the hash value of the previous block to each block and distributes the generated blockchain across multiple node devices for storage. The recording of transactions to the blockchain is executed by multiple node devices (which may also be referred to as "miners") connected to the P2P network. Note that the BC system 3 may be of any of the public, private, or consortium type. Also, the unit of data may be individual transactions, rather than blocks.

The information processing device 1 is a device owned by a business operator that conducts any of the steps of a process of recycling resin materials. The information processing device 1 is used to perform processes such as those related to history information as described below. Likewise, the information processing devices 4 and 5 are also owned by business operators that conduct any of the steps of a process of recycling resin materials. In the present embodiment, the information processing device 4 is a device that is installed upstream (pre-step) of the information processing device 1 in the resin material recycling process, and the information processing device 5 is a device installed downstream (post-step) of the information processing device 1 in the resin material recycling process. The user terminal 6 is a terminal used by a user of plastic products.

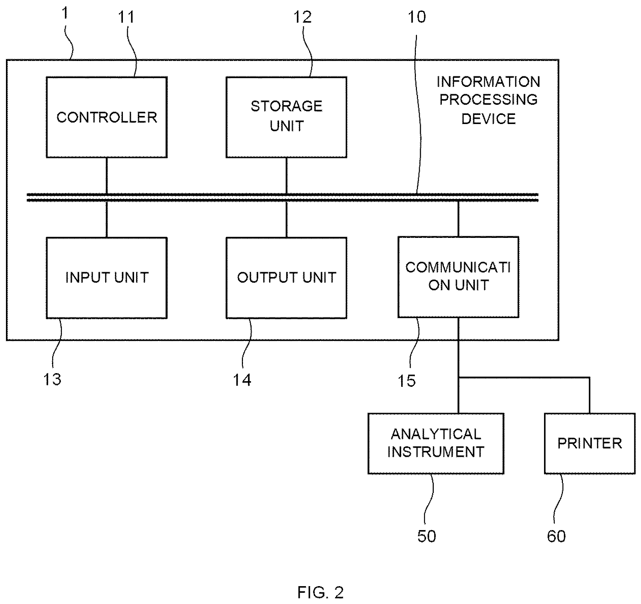

FIG. 2 is a diagram illustrating the hardware configuration of the information processing device 1. The information processing device 1 includes a controller 11, a storage unit 12, an input unit 13, an output unit 14, and a communication unit 15, which are electrically connected by a communication bus 10. In FIG. 2, the communication unit 15 of the information processing device 1 is depicted as being connected to an analytical instrument 50 and a printer 60. Hereinafter, each unit of the information processing device 1 will be described.

### (Controller 11)

The controller 11 is a processor, such as a central processing unit (CPU), which is not illustrated. The controller 11 realizes various functions pertaining to the information processing device 1 by reading a predetermined program stored in the storage unit 12. That is, the information processing performed by the software stored in the storage unit 12 can be specifically realized by the controller 11, which is an example of hardware, allowing it to be executed as each functional unit included in the controller 11. These will be described in more detail in the following section. Note that the controller 11 is not limited to a single unit, and may be implemented with multiple controllers 11 for the individual functions. A combination of the above is also acceptable.

### (Storage Unit 12)

The storage unit 12 stores various types of information defined by the foregoing description. For example, this may be implemented as a storage device such as a solid-state drive (SSD) that stores various programs pertaining to the information processing device 1 that are executed by the controller 11, or as a memory such as random access memory (RAM) that stores temporarily required information (such as arguments and arrays) pertaining to the program operations. The storage unit 12 stores various programs pertaining to the information processing device 1 that are executed by the controller 11, as well as variables and other similar information.

### (Input Unit 13)

The input unit 13 may be included in the housing of the information processing device 1, or it may be externally attached. For example, the input unit 13 may be implemented as a touchscreen integrated with the output unit 14. If it is a touchscreen, the user can input operations such as tapping, swiping, and the like. Of course, instead of a touchscreen, devices such as switch buttons, a mouse, or a QWERTY keyboard may be adopted. Additionally, audio input may be received via a microphone. That is, the input unit 13 receives operation inputs made by the user. These inputs are transferred as command signals via the communication bus 10 to the controller 11, and the controller 11 may perform predetermined control or computation as needed.

### (Output Unit 14)

The output unit 14 may, for example, be included in the housing of the information processing device 1, or it may be externally attached. The output unit 14 includes devices such as a display (including a touchscreen) and a speaker, and it displays visual information generated to be user- perceivable, such as screens, images, icons, and text, on the display surface. It also outputs sound, including audio.

### (Communication Unit 15)

The communication unit 15 is configured to transmit various electrical signals from the information processing device 1 to external components. The communication unit 15 is also configured to receive various electrical signals from external components to the information processing device 1. Note that the communication unit 15 may have a network communication function, which enables communication of various types of information between the information processing device 1 and external devices via the communication line 2.

Note that the analytical instrument 50 and the printer 60 are connected to the information processing device 1 via the communication unit 15.

The analytical instrument 50 is an instrument capable of measuring parameters and the like of resin materials, and its specifications and the like can be appropriately selected according to the measurement target. Typically, the analytical instrument 50 is configured to measure various parameters as described later. The printer 60 is a device capable of issuing desired printed materials, and it is sufficient to adopt a known device. Typically, the printer 60 is an inkjet printer or a laser printer.

In addition, although not illustrated in the figures, the information processing device 1 may be equipped with a camera, scanner, reader, etc. which can read codes and the like. The camera, scanner, and reader may be included in the housing of the information processing device 1, or they may be externally attached.

Additionally, although not illustrated in the figures, the information processing devices 4 and 5 may also have the same hardware configuration as the aforementioned information processing device 1. Furthermore, the information processing devices 4 and 5 may also be equipped with the functions described in Section 2 below; however, repeated descriptions thereof will be omitted in the present specification.

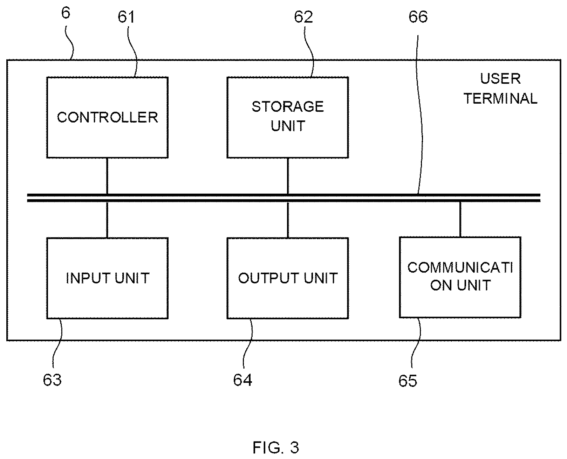

FIG. 3 is a diagram illustrating the hardware configuration of the user terminal 6. The user terminal 6 includes a controller 61, a storage unit 62, an input unit 63, an output unit 64, and a communication unit 65, which are electrically connected by a communication bus 66. These units are similar pieces of hardware with some performance differences from the units illustrated in FIG. 2.

### 2. Functional Configuration

This section describes the functional configuration of the present embodiment.

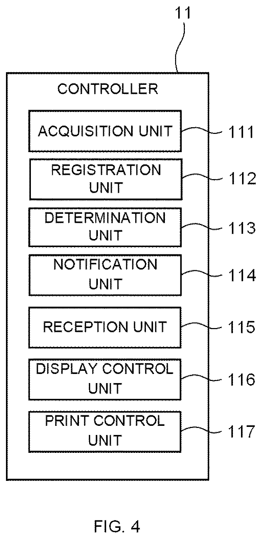

FIG. 4 is a functional block diagram illustrating the functions of the information processing device 1. As mentioned above, the information processing performed by the software (stored in the storage unit 12) is specifically realized by the hardware (the controller 11), allowing it to be executed as each functional unit included in the controller 11.

Specifically, the information processing device 1 (controller 11), which is one form of the information processing system 100, includes the following functional units: an acquisition unit 111, a registration unit 112, a determination unit 113, a notification unit 114, a reception unit 115, a display control unit 116, and a print control unit 117.

### (Acquisition Unit 111)

The acquisition unit 111 is configured to execute an acquisition step. In the acquisition step, the acquisition unit 111 is configured to acquire information via the communication unit 15 or the storage unit 12, and to make it readable in the working memory. In particular, the acquisition unit 111 acquires first information by associating a resin material with information related to a predetermined parameter obtained by measuring the resin material in any of steps of a process of recycling the resin material. In this acquisition, the acquisition unit 111 is typically configured to acquire various types of information (such as analytical data) from the analytical instrument 50 via the communication unit 15. Additionally, the acquisition unit 111 is configured to acquire various types of information from the information processing devices 4 and 5 via the communication line 2 and the communication unit 15. In the present embodiment, it is described that various types of information transmitted and received via the communication unit 15 are stored in the storage unit 12.

### (Registration Unit 112)

The registration unit 112 is configured to execute a registration step. In the registration step, the registration unit 112 transmits various types of information to the BC system 3, thereby registering the transmitted information on a blockchain. In particular, the registration unit 112 registers the acquired first information on a blockchain. Note that the information to be registered on a blockchain may be described on the same token or on separate tokens.

### (Determination Unit 113)

The determination unit 113 is configured to execute a determination step. In the determination step, the determination unit 113 determines authenticity of the first information based on the predetermined parameter registered as the first information and reference information related to the predetermined parameter. In this determination, the determination unit 113 may also execute various types of computation. The specific method of this determination will be described later.

### (Notification Unit 114)

The notification unit 114 is configured to execute a notification step. In the notification step, the notification unit 114 notifies one or more business operators that conduct recycling of the resin material when it is determined that the first information is inauthentic. This notification can employ various methods. For example, visual information recognizable by one or more business operators that conduct recycling is displayed on an output unit (output unit 14) of the information processing device 1 or the like, or audio recognizable by one or more business operators that conduct recycling is output to the information processing device 1 or the like.

### (Reception Unit 115)

The reception unit 115 is configured to execute a reception step. In the reception step, the reception unit 115 receives a display request from the user to display the history of the recycled resin material. Typically, the aforementioned display request is received in response to a predetermined operation performed via the user terminal 6 by a user, who is the consumer of a plastic product derived from the recycled resin material.

### (Display Control Unit 116)

The display control unit 116 is configured to execute a display control step. In the display control step, the display control unit 116 causes various types of information stored in the storage unit 12, or screens including such information, to be displayed in a visually perceivable manner. Specifically, the display control unit 116 controls visual information such as screens, images, icons, and messages to be displayed on the output unit 14 of the information processing device 1 or on the output unit 64 of the user terminal 6. The display control unit 116 may generate only the rendering information for displaying the visual information on the information processing device 1. Note that, in the present embodiment, the display control unit 116 displays, based on the aforementioned display request, the history information of the recycled resin material to be visually perceivable by the user. Here, the history information refers to visual information in which a business operator that has conducted the recycling process is associated with the predetermined parameter obtained by the information processing device 1 or the like.

### (Print Control Unit 117)

The print control unit 117 is configured to execute a print control step. In the print control step, the print control unit 117 controls the printer 60 connected to the information processing device 1 to print a predetermined printed material. Specifically, the print control unit 117 controls the printer 60 so that a code, such as one indicating access information specifying the access destination to the information processing device 1, is printed on a printed material.

### 3. Details of Information Processing

Section 3 describes an information processing method executed by the information processing system 100, with reference to activity diagrams and other figures. The following will first describe a registration process in which history information related to a recycling process is registered in the BC system 3.

### (Applicable Targets)

First, the applicable targets for the information processing device 1 of the present embodiment will be described. The information processing device 1 of the present embodiment is arranged in any of the steps of a process of recycling a resin material. The resin material can be appropriately selected from among known resin materials. Examples of resin materials that are applicable targets for the information processing device 1 of the present embodiment include the following: olefin resins (polyolefin resins) such as polyethylene, polypropylene, polybutadiene, polyisoprene, and polyisobutylene; polyvinyl chloride; ABS resins; polyester resins such as polyethylene terephthalate (PET), polybutylene terephthalate (PBT), and polyethylene furanoate (PEF); polyamide resins; acrylic resins such as polymethyl methacrylate (PMMA); epoxy resins; rubbers such as ethylene propylene diene monomer (EPDM); polycarbonate resins; and polyurethane resins. The resin material may also be a so-called FRP (Fiber Reinforced Plastics), which is a composite material composed of the aforementioned resin components and fiber materials. Examples of such fiber materials here include, but are not limited to, carbon fibers, aramid fibers, glass fibers, and Zylon fibers. In the present specification, the term "resin material" shall be treated as a concept that includes processed products (molded products) made from the various resins (resin materials) mentioned above. That is, applicable targets for the information processing device 1 of the present embodiment may include products made from the aforementioned resins (resin materials), such as containers, packaging films, housings for electrical appliances, logistics materials, packaging materials, agricultural plastics, bottle caps, automotive supplies, pipes, wire coating materials, construction materials, tires, adhesives, tapes, and medical supplies. Note that these products may also be referred to as "plastic products."

### (Recycling Process)

The recycling process to which the information processing device 1 of the present embodiment is applicable is not particularly limited. For example, when the applicable target is a bottle formed from polyethylene, the following steps (S1) to (S5) are performed. After the final product, which has been remanufactured in step (S5), is used, the used bottle (plastic product) may simply be subjected to step (S1) again. Note that the recycling process of the present embodiment may be either chemical recycling or mechanical recycling. In addition, other steps (storage, transportation, and inspection) not mentioned below may be performed between the respective steps. Furthermore, step (S5) also includes operations such as sealing contents into the molded bottle.

(S1) Segregate and discharge used resin materials. (S2) Collect and sort the resin materials. (S3) Melt the resin materials, remove impurities, and then pelletize them. (S4) Use the obtained pellets for molding to produce molded products. (S5) Treat the molded products as the final products.

These steps may be performed by a single entity, but preferably they are performed by two or more entities. The information processing system 100 of the present embodiment is preferable in the point that it facilitates traceability when the recycling process is performed by two or more entities, as mentioned above. Additionally, the overall picture of the recycling process is not limited to this; it can be appropriately set according to the types and characteristics of the intermediate products (separated plastic products, pellets, etc.) generated from the discharge of resin materials to remanufacturing.

Furthermore, the recycling process to which the information processing device 1 of the present embodiment is applicable may be the recycling process described in JP 2021-166499 A. Typically, the information processing device 1 of the present embodiment is applicable to a process of obtaining ethanol from syngas derived from waste containing resin materials, and using this ethanol to produce resin components. Ethanol is used as a raw material for the production of various organic compounds. Since ethanol has the same C₂ structure as ethylene, which accounts for approximately 60% of petrochemical products, it can be converted into ethylene monomer or butadiene monomer by existing chemical processes, and further used to produce organic chemical materials such as plastics. For example, ethanol can be used as a raw material for the production of butadiene, ethylene, propylene, isobutene, acetaldehyde, acetic acid, ethyl acetate, methyl (meth)acrylate, ethyl tert-butyl ether and ethylene glycol, ester compositions, polyester, acrylic acid, aminohexanoic acid, diethyl carbonate, polyethylene (PE), polyethylene terephthalate (PET), polypropylene (PP), polyisobutylene, polymethyl methacrylate (PMMA), ethylene propylene diene monomer (EPDM), polybutylene terephthalate (PBT), polyethylene furanoate (PEF), and polyurethane (PU). That is, the resin materials in the present embodiment may be any of the aforementioned compounds or their derivatives.

Note that the term "waste" mentioned above can be either household waste, commonly referred to as municipal solid waste (MSW), or business-related waste, also known as industrial solid waste (ISW).

To obtain ethanol from waste, for example, the step of processing waste at an incineration facility equipped with a gasification furnace is executed. The gasification furnace is a furnace capable of decomposing waste into molecular-level substances (e.g., gases including carbon monoxide and hydrogen) by partially combusting the waste in low-oxygen conditions. If the incineration facility includes a gas purifier, it can remove and refine the impurity gases contained in the gas converted by the gasification furnace to extract the required gases (e.g., carbon monoxide gas and hydrogen gas).

Next, the obtained gas is fed into an ethanol production device. The ethanol production device is a device capable of producing ethanol using the obtained gas. Here, the ethanol production is carried out, for example, by applying the obtained gas to a metal catalyst or microorganism.

The metal catalyst may be a catalyst used for the synthesis of oxygenates, for example. The catalyst for the synthesis of oxygenates contains component A (rhodium), component B (manganese), component C (alkali metals), and component D. Component D includes component D1, component D2, or component D3. Component D1 includes one or more elements selected from the group consisting of titanium, vanadium, and chromium. Component D2 is an element belonging to group 13 of the periodic table. Component D3 is one or more elements selected from the group consisting of magnesium and lanthanides. By containing components A to D, A to D1, A to D2, or A to D3, oxygenates can be efficiently synthesized.

Microorganisms include Butyribacterium methylotrophicum (Grethlein et al., 1990; and Jain et al., 1994b), Clostridium ragsdalei (Huhnke et al., 2008), Clostridium carboxidivorans (Liou, et al., 2005), Moorella species HUC22-1 (Inokuma, et al., 2007), Clostridium autoethanogenum (Abrini et al., 1994), and Clostridium ljungdahlii (Arora et al, 1995; Barik et al., 1988; Barik et al. 1990; and Tanner et al., 1993).

After the production of ethanol, it may be purified using known purification method as appropriates. Additionally, the obtained ethanol may be converted to resin using known synthesis methods.

### (Flow of Information Processing)

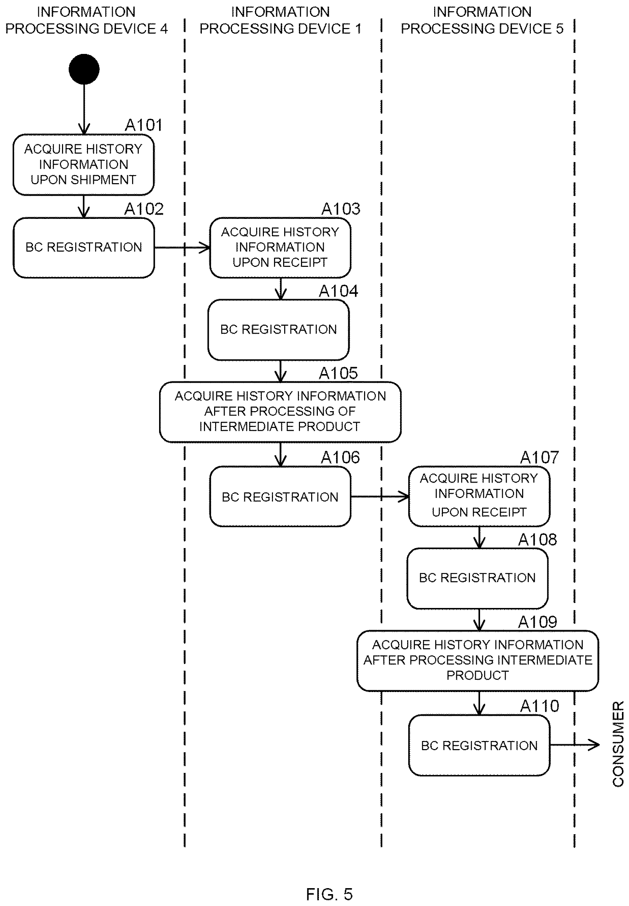

The flow of information processing performed by the information processing device 1 of the present embodiment and the like will be described using FIG. 5 and other figures. The information processing system 100 is equipped with a processor capable of executing a program so that each step illustrated in FIG. 5 and other figures below is performed.

FIG. 5 is an activity diagram representing the flow of a registration process. As mentioned above, the information processing system 100 of the present embodiment may include the information processing devices 4 and 5 in addition to the information processing device 1. Hereinafter, the flow of the registration process will be described, assuming that different entities own the information processing devices 1, 4, and 5.

First, the upstream entity that owns the information processing device 4 acquires history information regarding the intermediate products it has handled and registers the content thereof in the BC system 3 (Activities A101-A102). History information refers to information that indicates the steps the intermediate product has undergone up to this point, the business operators having implemented the respective steps, and changes in composition or parameters. At this time, a code that indicates information for accessing the history information registered in the BC system 3 (hereinafter referred to as "access information") is obtained, and a sticker or similar item printed with this code (hereinafter referred to as a "code printed material") is affixed to the exterior or the like of the intermediate product to be shipped.

Access information refers to information that indicates, for example, the location where the registered content is stored in the BC system 3, as well as information indicating that there is access permission to the registered content. The code indicated on the code printed material can be set from among known codes, and it can be either a one-dimensional code or a two-dimensional code. Due to the large amount of information that can be managed, a two-dimensional code such as a QR code (registered trademark) is preferred. Note that the code printed material may be directly affixed to the intermediate product, or the code may be directly printed on the intermediate product. Additionally, instead of printing, the surface of the intermediate product may be processed to form a raised and/or recessed pattern that indicates the code. In any case, the code will be attached to the intermediate product. Since this flow is similar to Activities A105-A106, which will be described later, the explanation is omitted here.

The entity that owns the information processing device 1 and has obtained the intermediate product from the upstream entity that owns the information processing device 4 first acquires the history information at the time of receipt and registers it in the BC system 3 (Activities A103-A104). The acquisition of this history information is performed, for example, via a display screen displayed on the information processing device 1.

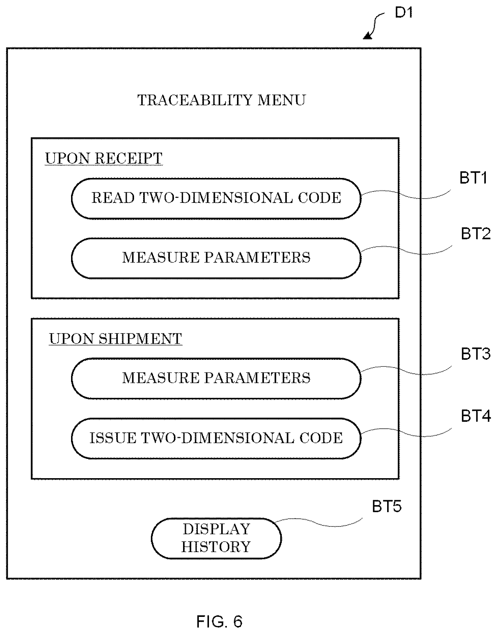

FIG. 6 illustrates an example of a display screen displayed on the information processing device 1. Display screen D1 illustrated in FIG. 6 is a screen displayed on the information processing device 1 by the display control unit 116. The entity that owns the information processing device 1 in contact with this screen can attempt to register the receipt of the intermediate product by pressing button BT1 through a click or equivalent operation. Typically, when this button BT1 is pressed, a camera or scanner provided in the information processing device 1 is activated, allowing the code displayed on the code attached to the exterior or the like of the intermediate product to be read.

That is, by reading the code, the information processing device 1 can manage the lot and similar information of the received intermediate product. Additionally, as an inspection at the time of receipt, pressing button BT2 allows for measurement of parameters and the like of the intermediate product. That is, pressing button BT2 on display screen D1 activates the analytical instrument 50 connected to the information processing device 1, enabling measurement of parameters of the received intermediate product.

Subsequently, the entity that owns the information processing device 1 uses the analytical instrument 50 to measure the parameters of the intermediate product upon receipt. That is, the acquisition unit 111 of the information processing device 1 acquires first information by associating a resin material with information related to a predetermined parameter obtained by measuring the resin material. Furthermore, by having the registration unit 112 of the information processing device 1 register the acquired first information in the BC system 3, it becomes possible to manage the traceability, authenticity, and other similar factors of the received product.

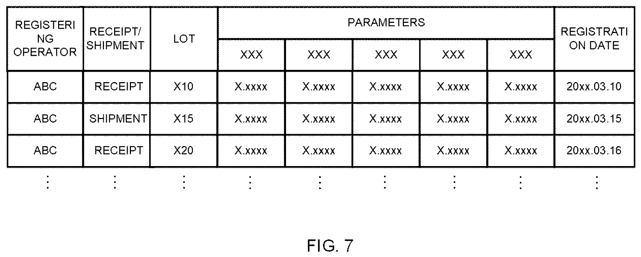

FIG. 7 is a diagram for representing an example of history information registered by the information processing device 1. The measured parameters of the intermediate product are associated with the registering operator (entity), the registration step (whether at the time of receipt or shipment), the lot, and the registration date, and treated as part of the history information. Viewing of the history information thus registered may be accomplished by pressing button BT5 on display screen D1 illustrated in FIG. 6. That is, the display control unit 116 of the information processing device 1 may display a screen displaying the history information in response to a request from the user to display the history information.

Note that the acquisition step performed by the information processing device 1 may also include the acquisition of information other than the aforementioned first information. Typically, another mode that can be adopted is to acquire the amount of the resin material (the transaction volume of the resin material) along with the aforementioned predetermined parameters. In addition, various other information, such as the transporter of the resin material, the weather on the date of receipt, and so forth, can also be acquired in combination. Furthermore, the information thus acquired in combination with the first information is associated with the resin material and registered in the BC system 3.

The entity that owns the information processing device 1 and has registered the history information at the time of receipt as above performs the processing it is responsible for in the recycling process of the resin material. After the processing, the entity again acquires the history information of the processed intermediate product and registers it in the BC system 3 (Activities A105-A106).

This information processing is performed via display screen D1 illustrated in FIG. 6. That is, by pressing button BT3 displayed on the screen of the information processing device 1, the analytical instrument 50 can be activated. This allows for the measurement of parameters of the processed intermediate product, which can then be registered in the BC system 3 as history information.

In addition to the aforementioned history information, in Activity A106, the content of the processing performed by the entity that owns the information processing device 1 may also be registered in the BC system 3 as history information. The content of this processing may include the conditions of the processing, the person in charge of the processing, time information regarding the processing, and the like.

Furthermore, after registering the predetermined information in the BC system 3 in Activity A106, the processed intermediate product is shipped to the entity that owns the downstream information processing device 5. In this case, button BT4 is pressed to issue a code printed material displaying a predetermined code. That is, by pressing button BT4 displayed on the screen of the information processing device 1, the print control unit 117 activates the printer 60 to issue a code printed material indicating access information for accessing the information registered in the BC system 3 regarding the processed intermediate product. As mentioned earlier, this code may alternatively be a raised and/or recessed pattern formed on the intermediate product. In that case, the entity that owns the information processing device 1 will perform the appropriate processing on the intermediate product.

The entity that owns the information processing device 1 and has registered the history information in the BC system 3 ships the processed intermediate product to the entity that owns the information processing device 5. The entity that owns the information processing device 5 received then executes Activities A107 to A110, which are the same as Activities A103 to A106. In the example illustrated in FIG. 5, the intermediate product processed by the entity that owns the information processing device 5 becomes a plastic product, which is delivered to the user (the consumer who purchases the plastic product) through a retail store or the like (not illustrated).

In Activity A110, a code indicating access information to the information registered in the BC system 3 is affixed to the exterior or the like of the resin material (plastic product) to be shipped. When disposing the resin material, the user can participate in recycling in such a way that the entity that owns the information processing device 4 can collect it. Here, since the collected resin material bears the affixed code, the entity that owns the information processing device 4 can verify the history information by reading the code. Accordingly, a recycling process with more reliable traceability is achieved.

Note that the information (first information) related to the certain parameter that is acquired and registered by the information processing device 1 of the present embodiment may be appropriately selected from information on known parameters, and typically includes parameters measurable by a measuring device such as the analytical instrument 50. Here, the predetermined parameter may be a single parameter or a combination of multiple parameters. Preferable examples of items included in the predetermined parameter are described below.

### (Examples of Items Included in Predetermined Parameter (1))

In the present embodiment, the information related to the predetermined parameter may include information on the molecular weight of the resin material.

Here, the information on the molecular weight may include information on the molecular weight of the resin, such as the number-average molecular weight (Mn), weight-average molecular weight (Mw), dispersity, and molecular weight distribution. Such information on molecular weight can contribute to quality control of resin materials in the recycling process.

Among these, the information on the molecular weight of the resin material in the present embodiment preferably includes information on the molecular weight distribution of the resin material. That is, conventional technologies such as those disclosed in PTL 2 manage quantities related to transactions, but these technologies simply manage numerical values as points. In contrast, when managing the molecular weight distribution, the distribution can be managed as information represented as a line. This further facilitates ensuring traceability. Additionally, when the information on raw materials during the recycling process is known, even if multiple raw materials are mixed, the theoretical shape of the resulting molecular weight distribution can be managed, and this enables reliable verification of authenticity.

The analytical instrument 50 used to obtain information on molecular weight may be appropriately set; for example, it may be GPC (Gel Permeation Chromatography).

### (Examples of Items Included in Predetermined Parameter (2))

In addition, the information related to the predetermined parameter in the present embodiment may include information on the thermal behavior of the resin material. Here, the information on the thermal behavior of the resin material may include information on the analytical values measured by DSC and/or TG-DTA. Typically, the information on the thermal behavior may include a softening point, a melting point, a weight loss ratio at a predetermined temperature, and a weight loss temperature at which a predetermined weight loss occurs.

As mentioned earlier, exemplary recycling processes may include a pelletizing step and a molding step. When such steps involving the heating of the resin material are included, obtaining information on the thermal behavior and registering it on a blockchain can help ensure traceability without slowing down the recycling process. The resin material in this case is preferably a thermoplastic resin, but may also be a thermosetting resin as long as it is practically feasible.

### (Examples of Items Included in Predetermined Parameter (3))

Furthermore, the information related to the predetermined parameter in the present embodiment may further include information on the isotope ratio of the constituent element of the resin material. Note that the constituent element of the resin material may be any element for which isotope tracking is feasible, such as carbon, oxygen, hydrogen, nitrogen, sulfur, silicon, or phosphorus, but it is preferable to include a carbon element.

In the present embodiment, since the various physical properties of resin materials may easily change during the recycling process, there may be a need for items that can be reliably managed regardless of recycling conditions. In such cases, isotope ratios are preferred for ensuring traceability, as they are less likely to change even during the recycling process of resin materials.

Moreover, the isotope ratio of the constituent element is likely to be maintained even in chemical recycling processes that involve changes in chemical structure, and it can be said that such an isotopic ratio can be suitably adopted in such recycling processes.

### (Examples of Items Included in Predetermined Parameter (4))

Additionally, the information related to the predetermined parameter in the present embodiment may include information on the content of a component different from the base resin of the resin material. Here, the component different from the base resin may include one or more components selected from the group consisting of plasticizers, fillers, colorants, weathering agents, mold release agents, and impurities.

Among these components, plasticizers, fillers, colorants, weathering agents, and mold release agents are appropriately selected from known materials that can be blended into resin materials, and their content is identified by known quantitative methods.

Plasticizers are agents that impart plasticity to resin materials. Depending on the composition of the base resin of the resin material, examples of plasticizers typically include the following: phthalate esters; non-aromatic dicarboxylic acid esters; aliphatic esters; polyalkylene glycol esters; phosphate esters; trimellitate esters; polystyrenes; butadiene-acrylonitrile; polychloroprene; chlorinated paraffins; hydrocarbon oils; polyethers; and vinyl polymers.

Fillers are blended into resin materials to increase their volume or to impart functional properties. The shape of these fillers is not particularly limited and may be granular or fibrous. Examples of fillers include the following.

Fillers used for increasing volume include calcium carbonate, talc, silica, and clay.

Fillers used for reinforcement include wollastonite, potassium titanate, xonotlite, gypsum fibers, aluminum borates, MOS (fibrous magnesium compounds), aramid fibers, various fiber types, carbon fiber, glass fiber, talc, mica, glass flakes, and polyoxybenzoyl whiskers.

Fillers used to impart antimicrobial properties include catechin, silver ion-loaded zeolite, and copper phthalocyanine.

Fillers used to impart gas barrier properties include synthetic mica and clay/synthetic mica nanofillers.

Fillers used for weight reduction, thermal insulation, and buoyancy include silica balloons, glass balloons, and shirasuballoons.

Fillers used to impart electrical conductivity include carbon black, graphite, carbon fibers, metal powders, metal fibers, and metal foils.

Fillers used to impart magnetic properties include various magnetic materials, various ferrites, magnetic iron oxides, Sm-Co, and Nd-Fe-B.

Fillers used to impart thermal conductivity include alumina, aluminum nitride, boron nitride (BN), and beryllium oxide.

Fillers used to impart piezoelectricity include barium titanate and lead zirconate titanate.

Fillers used to impart vibration damping properties include mica, graphite, potassium titanate, xonotlite, carbon fibers, and ferrites.

Fillers used to impart sound insulation include iron powder, lead powder, and barium sulfate.

Fillers used to impart slidability include graphite, hexagonal boron nitride (BN), molybdenum disulfide, fluoropolymer powder, and talc.

Fillers used to impart electromagnetic wave absorption properties include ferrite, graphite, charcoal powder, carboxymethyl cellulose, carbon nanotubes, and lead zirconate titanate.

Fillers used to impart light-reflecting and light-scattering properties include titanium dioxide, glass beads, calcium carbonate, aluminum powder, and mica.

Fillers used to impart thermal radiation properties include magnesium oxide, hydrotalcite, MOS, alumina, and charcoal powder.

Fillers used to impart flame retardancy include antimony oxide, aluminum hydroxide, magnesium hydroxide, zinc borate, red phosphorus, zinc carbonate, hydrotalcite, and dawsonite.

Fillers used to impart radiation shielding properties include lead powder and barium sulfate.

Fillers used to impart UV shielding properties include titanium dioxide, zinc oxide, and iron oxide.

Fillers used to impart dehydration, dehumidification, and water absorption properties include calcium oxide, magnesium oxide, and water-absorbing polymer gel.

Fillers used to impart deodorizing and gas absorption properties include zeolite and activated white clay.

Fillers used to impart anti-blocking properties include silica, calcium carbonate, talc, and spherical particulates.

Fillers used to impart oil absorption properties include ball-shaped calcium carbonate and ball-shaped xonotlite.

Colorants are agents that are blended into resin materials to color them. Typically, colorants include pigments and dyes.

Weathering agents are blended into resin materials to impart properties that enable them to withstand external environmental factors such as sunlight, temperature, humidity, and rain. Depending on the purpose, the weathering agent may be appropriately selected, for example, from benzophenones or amines.

Mold release agents are blended into resin materials to improve their release property from the mold during their molding process. Examples of such mold release agents include fluorine-containing polymers, silicone oil, metal salts of stearic acid, metal salts of montanic acid, and montanic acid wax.

In contrast, impurities are components that may be unintentionally mixed during processes such as the recycling process, and typical examples include organic and inorganic impurities.

Organic impurities include aromatic compounds such as ethylbenzene, m-xylene, and p-xylene; haloalkane compounds; alcohol compounds; ester compounds; ether compounds; and acetal compounds such as 1,1-diethoxyethane.

In contrast, inorganic impurities include heavy metals and their salts, such as cadmium (Cd), mercury (Hg), lead (Pb), zinc (Zn), iron (Fe), copper (Cu), arsenic (As), selenium (Se), chromium (Cr), gold (Au), platinum (Pt), silver (Ag), manganese (Mn), cobalt (Co), nickel (Ni), molybdenum (Mo), tungsten (W), tin (Sn), bismuth (Bi), uranium (U), and plutonium (Pu); alkali metals and their salts, such as lithium (Li), sodium (Na), potassium (K), rubidium (Rb), cesium (Cs), and francium (Fr); and alkaline earth metals and their salts, such as beryllium (Be), magnesium (Mg), calcium (Ca), strontium (Sr), barium (Ba), and radium (Ra).

The analytical instrument 50 used in obtaining information on the content of these components may be appropriately set. For example, it may be a nuclear magnetic resonance spectrometer, an infrared spectrometer, or a liquid chromatography ICP mass spectrometer.

### (Other Parameters)

In addition to the aforementioned examples, items included in the predetermined parameter are parameters such as optical properties or mechanical properties used in the technical field related to resins. Even in such cases, it is sufficient to set the analytical instrument 50 according to such parameters.

Furthermore, in the information processing method described above, the information processing device 1 can also determine the authenticity of the registered information at the time of registration in Activity A104. That is, the determination unit 113 can determine the authenticity of the first information based on the predetermined parameter registered as the first information and reference information related to the predetermined parameter.

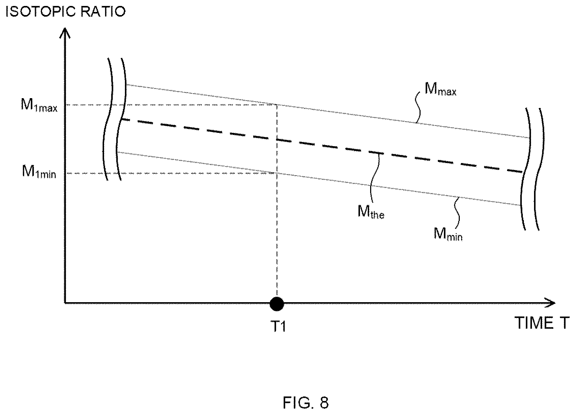

The process of determining authenticity will be described using FIG. 8. FIG. 8 is a conceptual diagram for describing the step of determining authenticity. In this conceptual diagram, the case is illustrated as an example in which the predetermined parameter is the isotopic ratio of the constituent element of the resin material.

In FIG. 8, the horizontal axis of the graph represents time T, while the vertical axis represents the isotope ratio M associated with the isotopes of a certain element. That is, when the constituent element may contain isotopes with isotopic half-lives, the determination unit 113 can calculate the theoretical isotope ratio Mₜₕₑ at a given time point. When registering the first information, the determination unit 113 determines how much the isotope ratio of the constituent element of the active material being measured deviates from the theoretical isotope ratio Mₜₕₑ. That is, in the present embodiment, threshold values (upper limit isotope ratio Mₘₐₓ and lower limit isotope ratio Mₘᵢₙ) are set for the determination unit 113 to determine authenticity. When the isotope ratio of the constituent element of the resin material being measured exceeds the upper limit isotope ratio Mₘₐₓ or falls below the lower limit isotope ratio Mₘᵢₙ, it is determined to be inauthentic.

More specifically, if the timing for registering the first information is set to time point T1, the authenticity of the first information is determined based on the upper limit isotope ratio M₁ₘₐₓ and the lower limit isotope ratio M₁ₘᵢₙ at this time point T1. That is, the reference information mentioned above may include such upper limit isotope ratio Mₘₐₓ and lower limit isotope ratio Mₘᵢₙ at a certain time point, and based on this reference information, the information processing device 1 of the present embodiment can verify authenticity.

Additionally, the notification unit 114 of the information processing 1 notifies one or more business operators that conduct recycling of the resin material when it is determined that the registered first information is inauthentic. The recipient of the notification may be the information processing device 1, the information processing device 4, or the information processing device 5, or all of these. It is also possible to notify all business operators that own hardware and other components constituting the information processing system 100. This notification may be based either on visual information or auditory information.

Furthermore, the reference information used for determining authenticity is not limited to the aforementioned information and may also include control values or other information used in executing the recycling process. In the above-described example, information related to the half-life of isotopes is included in the reference information. When managing parameters for which changes over time are negligible, the reference information may simply be a characteristic value related to the predetermined parameter.

In addition, the information processing system 100 of the present embodiment can use the history information registered as described above and utilize it in the following manner.

That is, the reception unit 115 can be configured to receive a display request from a user to display the history of the recycled resin material, and the display control unit 116 can be configured to display the history information of the recycled resin material to be visually perceivable by the user based on the display request. Here, the history information is visual information in which a business operator that has conducted the recycling process is associated with the predetermined parameter acquired by the information processing device 1 or the like.

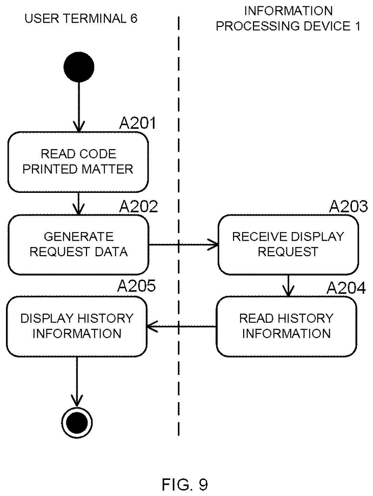

The flow of information processing regarding the display of the history information will now be described using FIG. 9. FIG. 9 is an activity diagram representing the flow of information processing regarding the display of history information.

That is, a user who wants history information performs a predetermined operation on the user terminal 6 to issue a display request. Although various modes may be adopted for receiving such a request, as one example, the reception unit 115 may be configured to execute the reception of a display request in response to a terminal owned by the user reading a code attached to a molded product formed from the recycled resin material (Activities A201-A203). That is, as mentioned earlier, a predetermined code may be attached to a plastic product (resin material) that is delivered to the consumer. It may be configured such that, when the user reads the code using the user terminal 6, request data is generated, enabling the receipt of a display request.

Upon receiving such a display request, the information processing device 1 reads the history information based on the display request and displays it as corresponding visual information on the user terminal 6 (Activities A204-A205).

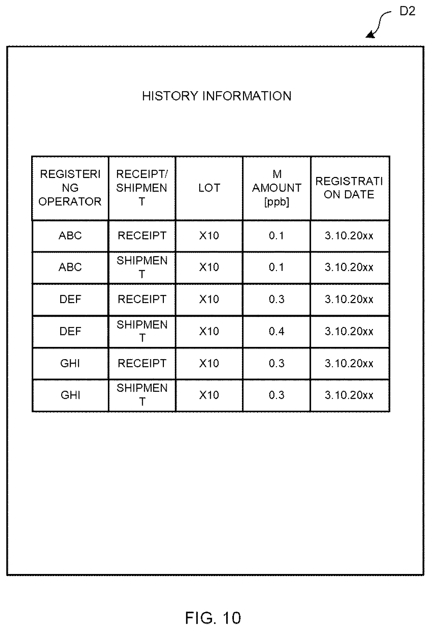

The visual information will be described with the help of figures. FIG. 10 illustrates an example of the history information displayed on the user terminal 6. As illustrated in FIG. 10, display screen D2 displays visual information in which a business operator that has conducted the recycling process of the resin material is associated with the predetermined parameter obtained by the information processing device 1 or the like. As for the mode of display, as illustrated in FIG. 10, the business operator and the predetermined parameter are displayed in a list format to enable visibility at a glance. Note that FIG. 10 illustrates an example in which the amount (M amount [ppb]) of heavy metal, which is an impurity, is displayed as an associated predetermined parameter; however, this is not the only possible example, and it is sufficient to adopt any of the above-mentioned parameters as the predetermined parameter to be displayed. Note that one or more parameters may be displayed. Also, the parameters may be displayed as non-numeric information (graphs or colors). In the present embodiment, by adopting such a mode, the user can get an overview of the recycling process, thereby improving the user's confidence in the recycling process.

For the display of such history information, the present specification describes, for convenience, a mode in which the information processing device 1 performs specific processing; however, a predetermined server or the like (not illustrated in FIG. 1) may perform the reception of this display request and control the display of the history information. In other words, when displaying the history information, it is sufficient to execute each of the reception step and the display step using any component in the entire information processing system 100.

As described above, according to the present embodiment, it is possible to more reliably ensure the traceability of resin materials during their recycling.

### 4. Modifications

Section 4 describes modifications of the information processing method of the above-described information processing device 1 and the like.

Although the preceding embodiment has been described as the configuration of the information processing device 1, a program may be provided that causes a computer to function as each unit of the information processing device 1 or the information processing system 100.

In the preceding embodiment, the acquisition unit 111, registration unit 112, determination unit 113, notification unit 114, reception unit 115, display control unit 116, and print control unit 117 have been described as functional units realized by the controller 11 of the information processing device 1. However, at least some of these may be implemented as functional units realized by the controllers of node devices that constitute the BC system 3.

In the preceding embodiment, the mode has been described in which a two-dimensional code such as a QR code (registered trademark) is attached to the exterior or the like of intermediate products for shipment. Instead of this two-dimensional code, an NFC (Near Field Communication) tag may be adopted. That is, a mode in which an NFC tag is provided on the exterior or the like of intermediate products for shipment, and the receiving entity reads the tag using an NFC reader is also possible.

In the preceding embodiment, each of the multiple entities acquires and registers the history information, but the acquisition and registration of the history information may be performed within a single entity. That is, the information processing system 100 of the present embodiment can also be constructed by placing each information processing device between factories or steps within a single entity.

### <Others>

Furthermore, the embodiment may be provided in each of the following modes described below.
(1) An information processing apparatus, comprising: an acquisition unit configured to acquire first information by associating a resin material with information related to a predetermined parameter obtained by measuring the resin material in any of steps of a process of recycling the resin material; and a registration unit configured to register the acquired first information on a blockchain.
(2) The information processing apparatus according to (1), wherein: the information related to the predetermined parameter includes information on a molecular weight of the resin material.
(3) The information processing apparatus according to (2), wherein: the information on the molecular weight of the resin material includes information on a molecular weight distribution of the resin material.
(4) The information processing apparatus according to (1), wherein: the information related to the predetermined parameter includes information on a thermal behavior of the resin material.
(5) The information processing apparatus according to (4), wherein: the information on the thermal behavior of the resin material includes information on an analytical value measured by DSC and/or TG-DTA.
(6) The information processing apparatus according to (1), wherein: the information related to the predetermined parameter includes information on an isotopic ratio of a constituent element of the resin material.
(7) The information processing apparatus according to (6), wherein: the constituent element of the resin material includes a carbon element.
(8) The information processing apparatus according to (1), wherein: the information related to the predetermined parameter includes information on content of a component different from a base resin of the resin material.
(9) The information processing apparatus according to (8), wherein: the component is one or more components selected from the group consisting of a plasticizer, a filler, a colorant, a weathering agent, a release agent, and an impurity.
(10) The information processing apparatus according to any one of (1) to (9), further comprising: a determination unit configured to determine authenticity of the first information based on the predetermined parameter registered as the first information and reference information related to the predetermined parameter.
(11) The information processing apparatus according to (10), further comprising: a notification unit configured to notify one or more business operators that conduct recycling of the resin material when it is determined that the first information is inauthentic.
(12) An information processing system, comprising: a reception unit configured to receive a display request from a user to display a history of a recycled resin material; a display control unit configured to display, based on the display request, history information of the recycled resin material to be visually perceivable by the user, wherein: the history information is visual information in which a business operator that has conducted a recycling process and the predetermined parameter acquired by the information processing apparatus according to claim 1 are associated.
(13) The information processing system according to (12), wherein: the reception unit executes reception of the display request in response to a terminal owned by the user reading a code attached to a molded product formed from the recycled resin material.
(14) An information processing method executed by an information processing apparatus, comprising: an acquisition step of acquiring first information by associating a resin material with information related to a predetermined parameter obtained by measuring the resin material in any of steps of a process of recycling the resin material; and a registration step of registering the acquired first information on a blockchain.
(15) A program for causing a computer to function as each unit of the information processing apparatus according to any one of (1) to (11).
(16) A program for causing a computer to function as each unit of the information processing system according to (12) or (13).

Of course, the above are not the only possible modes of implementation.

Finally, although various embodiments of the present invention have been described, these are presented merely as examples and are not intended to limit the scope of the invention. The novel embodiments may be implemented in various other forms, and various omissions, substitutions, and modifications can be made without departing from the gist of the invention. Such embodiments and their modifications are included within the scope and gist of the invention, and also within the scope of the invention as defined in the claims and their equivalents.

### [Reference Signs List]

1: information processing device
2: communication line
3: BC System
4: information processing device
5: information processing device
6: user terminal
10: communication bus
11: control unit
12: storage unit
13: input unit
14: output unit
15: communication unit
50: analytical instrument
60: printer
61: control unit
62: storage unit
63: input unit
64: output unit
65: communication unit
66: communication bus
100: information processing system
111: acquisition unit
112: registration unit
113: determination unit
114: notification unit
115: reception unit
116: display control unit
117: print control unit
BT1 to BT5: buttons
D1, D2: display screens

## Claims

1. An information processing apparatus, comprising:
an acquisition unit configured to acquire first information by associating a resin material with information related to a predetermined parameter obtained by measuring the resin material in any of steps of a process of recycling the resin material; and
a registration unit configured to register the acquired first information on a blockchain.

2. The information processing apparatus according to claim 1, wherein:
the information related to the predetermined parameter includes information on a molecular weight of the resin material.

3. The information processing apparatus according to claim 2, wherein:
the information on the molecular weight of the resin material includes information on a molecular weight distribution of the resin material.

4. The information processing apparatus according to claim 1, wherein:
the information related to the predetermined parameter includes information on a thermal behavior of the resin material.

5. The information processing apparatus according to claim 4, wherein:
the information on the thermal behavior of the resin material includes information on an analytical value measured by DSC and/or TG-DTA.

6. The information processing apparatus according to claim 1, wherein:
the information related to the predetermined parameter includes information on an isotopic ratio of a constituent element of the resin material.

7. The information processing apparatus according to claim 6, wherein:
the constituent element of the resin material includes a carbon element.

8. The information processing apparatus according to claim 1, wherein:
the information related to the predetermined parameter includes information on content of a component different from a base resin of the resin material.

9. The information processing apparatus according to claim 8, wherein:
the component is one or more components selected from the group consisting of a plasticizer, a filler, a colorant, a weathering agent, a release agent, and an impurity.

10. The information processing apparatus according to any one of claims 1 to 9, further comprising:
a determination unit configured to determine authenticity of the first information based on the predetermined parameter registered as the first information and reference information related to the predetermined parameter.

11. The information processing apparatus according to claim 10, further comprising:
a notification unit configured to notify one or more business operators that conduct recycling of the resin material when it is determined that the first information is inauthentic.

12. An information processing system, comprising:
a reception unit configured to receive a display request from a user to display a history of a recycled resin material;
a display control unit configured to display, based on the display request, history information of the recycled resin material to be visually perceivable by the user, wherein:
the history information is visual information in which a business operator that has conducted a recycling process and the predetermined parameter acquired by the information processing apparatus according to claim 1 are associated.

13. The information processing system according to claim 12, wherein:
the reception unit executes reception of the display request in response to a terminal owned by the user reading a code attached to a molded product formed from the recycled resin material.

14. An information processing method executed by an information processing apparatus, comprising:
an acquisition step of acquiring first information by associating a resin material with information related to a predetermined parameter obtained by measuring the resin material in any of steps of a process of recycling the resin material; and
a registration step of registering the acquired first information on a blockchain.

15. A program for causing a computer to function as each unit of the information processing apparatus according to any one of claims 1 to 11.

16. A program for causing a computer to function as each unit of the information processing system according to claim 12 or claim 13.
